# EUROPEAN PATENT APPLICATION

(11) **EP 4 498 594 A1**
(43) Date of publication of application: **29.01.2025**
(21) Application number: 23306295.9
(22) Date of filing: 26.07.2023
(51) Int. Cl.: H02P 5/48, H02P 5/50, H02P 5/51, H02P 5/74, H02P 5/747, H02P 6/00, H02P 25/06, H02P 6/04

(54) **METHOD FOR SYNCHRONOUSLY CONTROLLING TWO MOTORS**

(71) Applicant: SCHNEIDER ELECTRIC INDUSTRIES SAS, 92500 Rueil-Malmaison (FR)
(72) Inventor: JANEK, Gunther, 63768 Hösbach (DE)
(74) Representative: Manitz Finsterwald Patent- und Rechtsanwaltspartnerschaft mbB

(57) **Abstract**

The present invention relates to a method for synchronously controlling a first motor and a second motor, wherein the first motor is controlled by a first drive unit, the second motor is controlled by a second drive unit, wherein the first motor and the second motor work together to drive the same axis and/or to move the same load, wherein the drive units each perform a closed loop control for driving the respective motor, wherein the closed loop control of each of the drive units is based on the same control loop data set.

## Description

The present invention relates to a method for synchronously controlling a first motor and a second motor, wherein the first motor is controlled by a first drive unit, the second motor is controlled by a second drive unit. The first motor and the second motor work together to drive the same axis and/or move the same load.

There exist a number of applications in which two motors work together to drive the same axis and/or to move the same load. For example, a rotational load can be driven by two motors which are both coupled to the same rotating axis. Also, two linear motors can be arranged at opposite sides of a load that is moved by the two linear motors.

Currently it is known to e.g. use one of the motors as a parent, wherein the corresponding drive unit sends position control or torque commands to a child motor/drive unit. Alternatively, it is also known to simply wire the two motors in parallel.

However, in the parent/child solution, the specific parameters of the second/child motor cannot be taken fully into consideration. Particularly, only the parent motor is operating closed loop, resulting in lower performance of the child motor. The parallel wiring does not allow to take benefit from power scaling by using more than one motor/drive unit.

The drawbacks for both these solultions ultimately lead to a reduced accuracy when driving the axis/moving the load. Also, problems can appear that the motor's forces do not add up but block each other or that - for linear motors - the load may tilt and become mechanically blocked. Finally, if different motors or motor sizes are used it is difficult to balance the motors accordingly.

It is therefore the object of the present invention to provide a method for controlling at least two motors that allows an improved operation when the two motors work together to drive the same axis and/or move the same load.

This object is satisfied by the method of claim 1. Claim 1 teaches a method for synchronously controlling a first motor and a second motor, wherein the first motor is controlled by a first drive unit, the second motor is controlled by a second drive unit, wherein the first motor and the second motor work together to drive the same axis, i.e. a common axis, and/or to move the same load, i.e. a common load. According to the invention, the drive units each perform a closed loop control for driving the respective motor, wherein the closed loop control for each of the drive units is based on the same control loop data set.

When a drive unit controls the operation/movement of a motor, the drive unit e.g. evaluates the current position and/or speed of the axis and/or load and then correspondingly controls e.g. the voltage and/or currents supplied to the motor to a desired position and/or drive the motor with a desired speed, torque and/or force. The current position and/or speed of the motor can be detected e.g. with an encoder. Consequently, a detected or measured value relating to the operation of the motor is used to control the further operation of the motor. This is called a closed loop control. The data on which the closed loop control is based, e.g. the current position of the motor, the current torque and/or force supplied by the motor can be part of the control loop data set. Further or different data can of course also be part of the control loop data set.

The invention is now based on the idea to use the same control loop data set for the closed loop control of each of the drive units. For example, all drive units base their (separate and/or individual) closed loop control on the same value for the position and/or speed of the axis. It was found that thereby a very reliable and accurate operation of multiple motors driving the same axis is possible.

The control loop data set may be stored in a shared and/or synchronized memory.

Each of the drive units is performing its own closed loop control of the motor that is connected to the respective drive unit. However, at least some of the input data for the closed loop control stems from the same control loop data set, i.e. some of the input data for the closed loop control of the different drive units is identical. Preferably, there exists only one control loop data set.

It is to be understood that the data in the control loop data set can change over time, e.g. when the position or the speed of the axis changes. If a value in the control loop data set is changed, this change is effected in all drive units that then base their closed loop control on the changed value. It is beneficial that the different drive units - at a certain point in time - use the same data from the control loop data set.

The drive units can e.g. be connected to a motion controller which provides drive commands to a number of drive units. The motion controller can in turn be connected to a PLC (Programmable Logic Controller) which supplies higher level commands to the motion controller. Also, the motion controller can be formed by a PLC or can comprise a PLC or can be comprised in a PLC. In some environments PLC and motion controller therefore can by synonyms. It is possible that different drive units are realized in one drive, i.e. on the same hardware. However, the operation of the different drive units may be separate.

The control loop data set may be stored on any of the PLC, the motion controller or at least one of the drive units, wherein the different drive units may then access the control loop data set and/or regularly receive copies and/or updates of the control loop data set, as will be explained in more detail later.

The control loop data set can also be termed a "control loop context" as the data in the data set provides the context or the control loops of the different drive units. By making the control loop data set available for a specific drive unit, the drive unit can also be termed a "control slot" which has the capability to perform an axis regulation.

According to the invention, a higher accuracy and smoother operation can be achieved for motors working together to drive the same axis and/or move the same load. Furthermore, the concept of the invention is very flexible since the control loop data set can be made available to different drive units during operation (or in other words: one available control slot (i.e. a drive unit) can be assigned to a control loop context) and/or the control loop context can be assigned to a control slot.

Thereby, the motors involved in driving an axis and/or moving a load can be changed dynamically during operation.

It is to be understood that in the present technical field, the movement of a load is also referred to as the "driving of an axis". For example, if a linear motor moves a load, e.g. a carrier, this can also be termed "driving of an axis", wherein the carrier is the axis. The position and speed of the carrier are then the position and speed of the axis. Consequently, when it is herein referred to the driving of an axis, this also always means the movement of a load.

Further embodiments of the invention are disclosed in the description, the figures and the claims.

According to a first embodiment, the drive units directly or indirectly access the same memory which stores the control loop data set. The memory can be installed on one of the drive units, on the motion controller and/or on a different entity. The drive units may be connected to the entity having the memory via a data link, e.g. a data bus or field bus. The direct access to the memory which stores the control data set would be performed, e.g. if the control loop data set is stored on a motion controller or on one of the drive units, wherein the drive units (or the other drive units) then regularly access the memory to download the updated data from the control loop data set. An indirect access would be that the control loop data set is regularly distributed to the drive units, wherein each drive unit stores its own copy of the (regularly updated) control loop data set.

According to a further embodiment the control loop data set is repeatedly synchronized between the drive units. Preferably, the drive units synchronize the control loop data set self-organized, after a step of making the drive units knowing each other. The drive units may make the control loop data set accessible for the motion controller. The repeated synchronization between the drive units assures that the closed loop control of the drive units is based on the same data of the control loop data set. Thereby a mirroring of the memory which stores the control loop data set may be performed. The synchronization can be performed e.g. in predefined time intervals, e.g. at least every 10 milliseconds, every millisecond or every 0,5 milliseconds. The synchronization can also be event-based, i.e. occur when a change in the control loop data set occurs.

In general, the same values, preferably at one point in time, are used for the closed control loop within different drive units.

According to further embodiment the control loop data set comprises a position and/or a speed value and/or an acceleration value of the axis and/or the load. All the mentioned values can be values of the current point in time, i.e. up to date values. The values in the control loop data set can be updated e.g. at least every 10 milliseconds, every 1 millisecond or every 0,5 milliseconds.

According to a further embodiment, the control loop data set comprises one or more of the following:
- a mass value of the axis and/or of the load;
- an inertia value of the axis and/or of the load;
- a friction and/or resistance value of the axis and/or of the load;
- gain factors used for the closed loop control within the drive units.

Again, the aforementioned values can be current/up to date values which can be updated in the time intervals given above.

The values in the control loop data set help keep the closed loop control over different drive units consistent, yielding a more stable and accurate control of the axis.

According to a further embodiment, at least some of the values in the control loop data set are updated by one or more of the drive units. The drive units can e.g. be configured to determine or to measure at least one of the values in the control loop data set. If a determined/measured value of one of the drive units differs from the value stored in the control loop data set, the value in the control loop data set can be updated based on the new determined/measured value. For example, one of the drive units may send the updated value to a motion controller or a PLC, i.e. to a supervising unit. The supervising unit can be any unit, e.g. one of the drive units, the motion controller, the PLC etc. The supervising unit can, after receiving an updated value, update the control loop data set.

According to a further embodiment, an updated value for the control loop data set is based on, preferably measured, data from at least two of the drive units, wherein data from the different drive units is preferably averaged or weighted to yield the updated value. By taking into account the values determined or measured by different drive units it has been found that an even higher accuracy of driving the axis can be achieved. For example, the sensors of the different drive units measuring a value, e.g. a position value of the axis, can be arranged at different positions along the axis and can thereby provide an e.g. averaged value that resembles more closely the true state of the axis.

According to a further embodiment, the drive units, in addition to the control loop data set, use internal control loop data which may be different for different drive units for performing the closed loop control, wherein the internal control loop data preferably comprises voltage and/or current values for the motor controlled by the respective drive unit. The closed loop control of a motor can thus be based on the one hand on the data from the control loop data set and on the other hand on the internal control loop data. The internal control loop data comprises data that is unique for each motor and/or drive unit. For example, the voltage currently supplied to the motor and/or the current currently supplied to the motor can be part of the internal control loop data. Furthermore, a motor type, further motor parameters, etc. can be part of the internal control loop data. The control loop data is necessary to accommodate the closed control loop to the specific motor, thereby allowing e.g. the use of different motors to drive the same axis.

According to a further embodiment, at least one of the drive units is assigned a share value which indicates the share of driving the axis and/or moving the load of the respective motor. In other words, the power, torque and/or force required to drive an axis can be distributed over different motors by using the share value. A lower share value indicates that the respective motor plays a smaller part in driving the respective axis. For example, the drive unit may reduce the power, torque and/or force supplied by the motor based on the share value. The share value can indicate which percentage of the power, torque and/or force of a motor is actually provided by the motor as compared to which power, torque and/or force the motor would provide only based on the control loop data set and/or the internal control loop data. Consequently, the share value can be between 0% and 100% but could also exceed 100% if a motor should be driven above its usual limitations.

According to a further embodiment, the share value is set dependent on the speed of the axis, dependent on the torque and/or the power consumption of one of the motors, dependent on the position of the axis and/or the load and/or is set manually. In other words, the share value for one or more of the drive units can be set dynamically and particularly can be set depending on another value (e.g. based on position or speed of the axis). For example, if it is known that the first motor is performing better at lower speeds, wherein the second motor is performing better at higher speeds, the share value can be set higher for the first motor at lower speeds, wherein at higher speeds the share value of the first motor is reduced and the share value of the second motor is increased.

Additionally or alternatively, the share value can be shifted linearly, for example over time and/or based on the position of the axis. Also, the share value can remain constant.

Furthermore, it is also possible to set the share value manually. For example in case one of the motors need to be replaced during maintenance, the share value of the drive unit of the respective motor can be reduced to zero. The motor can then be replaced. After replacing the motor, the share value can then be increased. Thereby, the maintenance can be simplified since only the share value needs be changed, whereas the operation of the axis can continue without interruption.

Preferably, the share values for the different drive units can be set such that the combined share values amount to a predefined value or exceed the predetermined value at any given point of time.

A share value of 100% or if no share value is assigned to a drive unit means that the drive unit and the motor are performing "normally", i.e. based on the control loop data set and/or the internal control loop data as described above.

According to a further embodiment, a third motor is controlled by a third drive unit, wherein the third motor drives the same axis and/or moves the same load as the first and/or second motor. Preferably, the drive unit performs a closed loop control for driving the third motor, wherein the closed loop control of the third drive unit is based on the control loop data set. Further preferably, the third motor starts driving the axis and/or moving the load when the first and/or second motor are already driving the axis and/or moving the load. Alternatively or additionally, the first and/or second motor stop driving the axis and/or moving the load, wherein one of the other motors continues driving the axis and/or moving the load. In other words, one of the first and second motor can stop supporting the driving of the axis, wherein another motor, namely the third motor, begins supporting the movement of the axis.

This can be particularly helpful if several linear motors are arranged one after the other to form a track (as in the multi-carrier system described below) wherein the load (i.e. the axis) moves from one linear motor to the other. For example, first, only the first motor can drive the axis, then for a certain amount of time the first and the second motor can drive the axis together, when the load is in an area between the first and second motor. When the load is then only in the area of the second motor, the first motor can stop supporting the movement. When the load then reaches an area where it can be driven by the second and third motor, the third motor can start moving the load/driving the axis so that a continuous movement of the load can be achieved.

Such a transition can be easily achieved by simply sharing the control loop data set firstly with the first and second motor, i.e. with the first and second drive unit, and then later sharing the control loop data set with the second and third drive unit. Other than sharing the control loop data set it is also possible to distribute the control loop data set to the respective drive units or to allow access to the control loop data set for the respective drive units, as described above, e.g. by a mirrored memory. In other words, the control loop data set can be assigned to a control slot, e.g. firstly to the first drive unit of the first motor. When the load can be driven by the first and the second motor, the control loop data set (i.e. the control loop context) can be assigned simultaneously to two control slots, namely the first drive unit and the second drive unit. Later, the control loop data set can be assigned to the second and third drive unit.

Alternatively or additionally, the transitioning from one drive unit to another can also be achieved by changing the share factors of the respective drive units. For example, when the load more and more is in the area of the second drive unit, the share factor of the first drive unit can be decreased (e.g. linearly or based on the position of the load) to 0%. Similarly, when the load reaches the area where it can be driven by the third motor, the share factor of the third drive unit and thus of the third motor can be increased (e.g. linearly or based on the position of the load).

Thereby, the operation of different loads along a track of linear motors can be greatly simplified since a control loop data set (or "control loop context") for each load can simply be assigned to different drive units as the load moves along the track.

It is to be understood that also only three motors are mentioned here, an even higher number of motors could be used to drive the same axis and/or move the same load.

The invention also relates to a motor system comprising a first motor and a second motor, a first drive unit and a second drive unit as well as a driven axis or a moved load, wherein the first motor is controlled by the first drive unit, the second motor is controlled by the second drive unit, wherein the first motor and the second motor work together to drive the axis and/or to move the load, wherein the drive units each are configured to perform a closed loop control for driving the respective motor, wherein the closed loop control of each of the drive units is based on the same control loop data set.

As disclosed above, the motor system can also comprise a third motor and a third drive unit, which controls the third motor.

The drive units may be connected, e.g. via a data bus or field bus (e.g. Sercos, EIP, EtherCAT and the like), to a motion controller. The motion controller, in turn, may be connected to a PLC, wherein the PLC controls the motion controller and the motion controller controls the drive units.

According to an embodiment of the motor system, at least one of the motors is a rotating motor or a linear motor, wherein preferably two of the motors are linear motors that are arranged on different sides of the load or are arranged one after another to form a continuous track for the load. In case one or more of the motors are rotating motors, the motors can drive a rotating axis. For linear motors, the axis can be a load that moves along the track formed by the linear motors. The linear motors may be arranged on different or opposite sides of the load. In this arrangement, due to the use of the same control loop data set a tilting and thus mechanical blocking of the load can be prevented. For linear motors arranged one after another, the transitioning between distinct drive units and/or motors can be simplified.

The invention further relates to a multi-carrier system comprising a plurality of linear motors, the linear motors are arranged along a track, the track preferably forming a closed loop, wherein a plurality of carriers are arranged at the track and are independently movable along the track by the linear motors, wherein at least two (or all) of the linear motors are part of a motor system as described above.

Each of the carriers can be a separate axis (i.e. load). The carriers can comprise a permanent magnet to allow the linear motors to move the carriers by producing a magnetic field.

The different linear motors of the multi-carrier can be arranged directly next to each other to form the continuous track which is closed in itself and thus forms a closed loop. Each of the carriers can be moved independently of other carriers.

In particular for the multi-carrier but also in general, for each axis (i.e. for each carrier) a separate control loop data set can be maintained. Accordingly, at least two or more control loop data sets can be used for different axes. The separate control loop data sets for the separate carriers can e.g. comprise the respective current information on the position, speed, acceleration and/or weight of the respective carrier.

When one of the carriers is moving along the track, the control loop data set of the respective carrier can be made available or assigned to the drive unit or drive units which currently can drive the carrier, as the carrier is in the section of the track in which the respective linear motor can produce a magnetic field to drive the carrier. Thus, for the multi-carrier system but also for other systems comprising two neighboring linear motors, the control loop data set for the axis/carrier can be used by two drive units at the same time. Later, only one drive unit uses the control loop data set, when the axis has moved out of a transitioning area between the two motors. When the axis (i.e. the carrier) then moves into the next transitioning area between two linear motors, the control loop data set can then be assigned to these two linear motors. In other words, the control loop data set can alternatingly be used by two drive units and then by only one drive unit.

The disclosure with respect to the method of the invention is also valid for the motor system and the multi-carrier system. This is particularly true for embodiments and advantages. Further, it is to be understood that all features and embodiments disclosed herein can be combined if not explicitly stated otherwise.

Various features and advantages of the present invention will become more apparent from the following exemplary description and the examples shown in the accompanying drawings, wherein:
- Fig. 1A to 1C: show different motor arrangements of two motors driving the same axis/load;
- Fig. 2: shows the use of the same control loop data set in different drive units for rotational motors;
- Fig. 3: shows the use of the same control loop data set for two linear motors arranged on opposite sides of a load;
- Fig. 4: shows the use of different control loop data sets for linear motors arranged along a common track;
- Fig. 5: shows a multi-carrier system in a schematic view; and
- Fig. 6: shows a curved section of the multi-carrier of Fig. 5 in more detail.

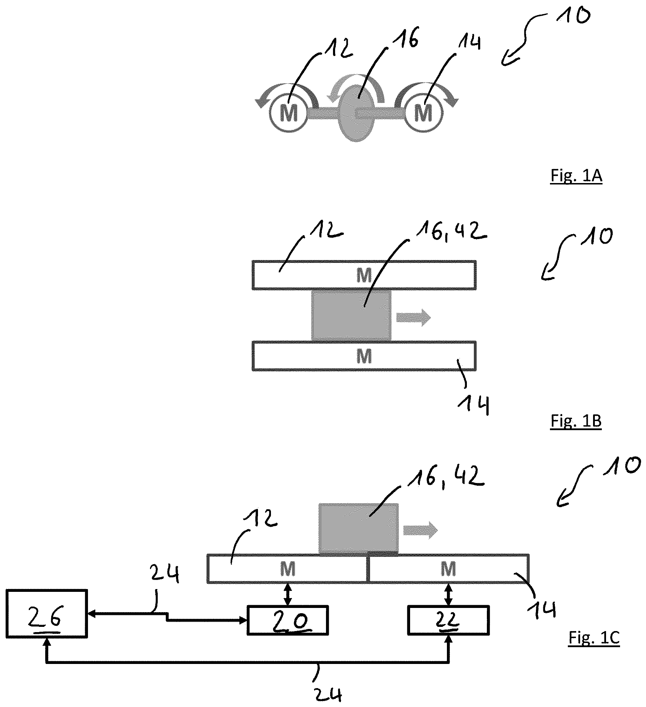

Fig. 1A shows a motor system 10 with a first motor 12 and a second motor 14. Both motors 12, 14 drive the same axis 16 which in the example of Fig. 1A is a rotating axis.

The example of Fig. 1B also shows a motor system with a first and a second motor 12, 14. In Fig. 1B the two motors 12, 14 together move the axis 16, wherein the motors are linear motors and drive/move the axis 16 which is a carrier that is arranged between the two linear motors 12, 14.

In Fig. 1C, again, the two motors 12, 14 are linear motors that are arranged at the same side of an axis 16, which again is a carrier, wherein the two linear motors 12, 14 form a continuous track 18 for the axis 16.

In Fig. 1C a first drive unit 20 which controls the first motor 12 and a second drive unit 22 which controls the second motor 14 is shown. The drive units 20, 22 can e.g. provide electrical power to the motors 12, 14 and receive position information on the axis 16 from the motors 12, 14. The motors 12, 14 can e.g. determine the position information using encoders and/or position magnets and the like (not shown). The drive units 20, 22 are connected via a field bus 24 (e.g. SERCOS, EIP, EtherCAT, etc.) to the motors 12, 14. The motion controller 26 could be connected via the field bus 24 to a PLC (not shown).

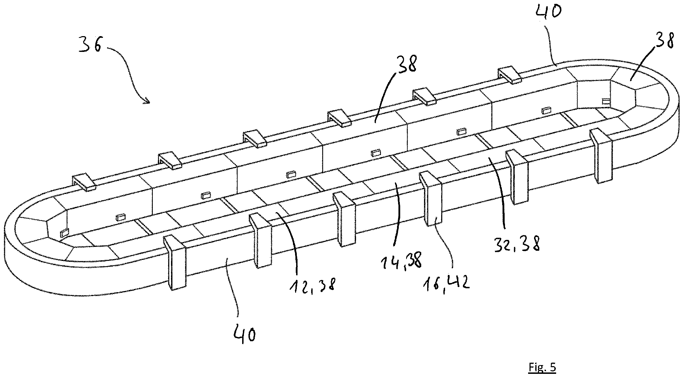

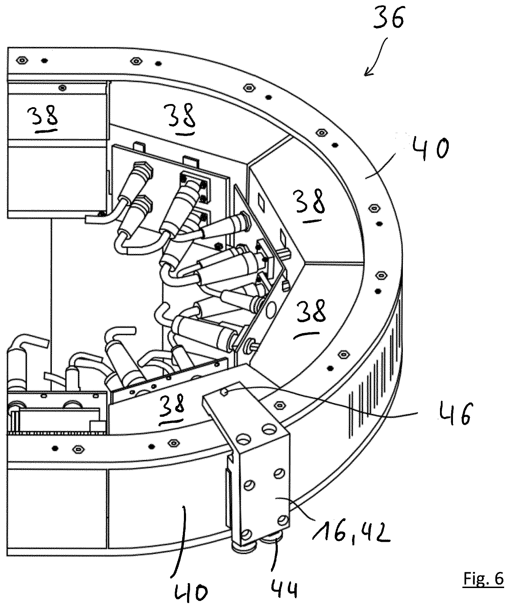

In the same manner as shown in Fig. 1C, also the motors 12, 14 shown in Fig. 1A and Fig. 1B could be connected to drive units 20, 22. For example, for the rotational motors 12, 14 of Fig. 1A, the drive units 20, 22 can be connected to the motors 12, 14 by motor power cables and encoder cables. In case of the linear motors 12, 14 (e.g. as in the multi-carrier of Figs. 5 and 6), the drive units 20, 22 can be integrated in the same housing as the coils of the linear motor 12, 14, wherein a wiring is internal.

The motors shown in Fig. 1A-C all work together to drive the respective same axis 16.

The drive units 20, 22 are configured to perform a closed loop control for driving the respective motors 12, 14, wherein the closed loop control of each of the drive units 20, 22 is based on the same control loop data set.

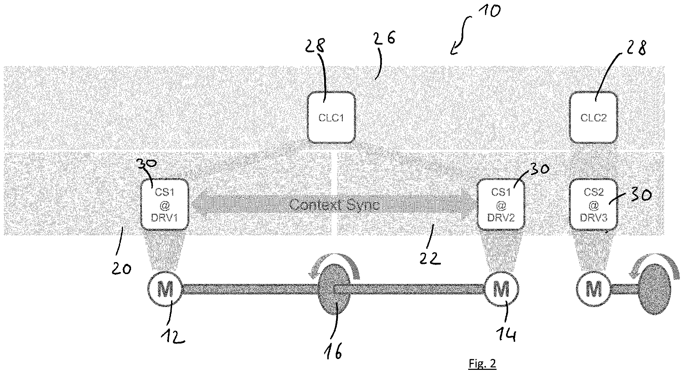

Fig. 2 shows such a control loop data set 28 which in the Figures is also abbreviated as CLC (Control Loop Context). In Fig. 2 the control loop data set 28 is stored in the motion controller 26. However, it is to be understood that this is merely an example and that the Control Loop Context 28 is a virtual concept, which may also happen inside of or distributed over the drive units 20, 22.

A first control loop data set 28 (CLC1) is used to drive the first motor 12 and the second motor 14. As shown in Fig. 1A, the first and second motor 12, 14 drive the same rotational axis 16. As an example, the control loop data set 28 can be stored in the motion controller 26 and can synchronize the control loop data set 28 to the first drive unit 20 and the second drive unit 22. In the first drive unit 20 the control loop data set 28 is assigned to a control slot 30 (in the Figures also abbreviated as "CS"). The control loop data set 28 is continuously synchronized so that the first drive unit 20 and the second drive unit 22 base their control of the motors 12, 14 on the same data in the control loop data set 28. In other words, the context of the motor control is synchronized.

As an addition, Fig. 2 also shows a further control loop data set 28 which relates to a different axis 16 with only one motor. This control loop data set 28 is also assigned to the second drive unit 22 but to a different controller slot 30. It is to be understood that the different control slots 30 in practice can work as different drive units although they may be executed on the same hardware.

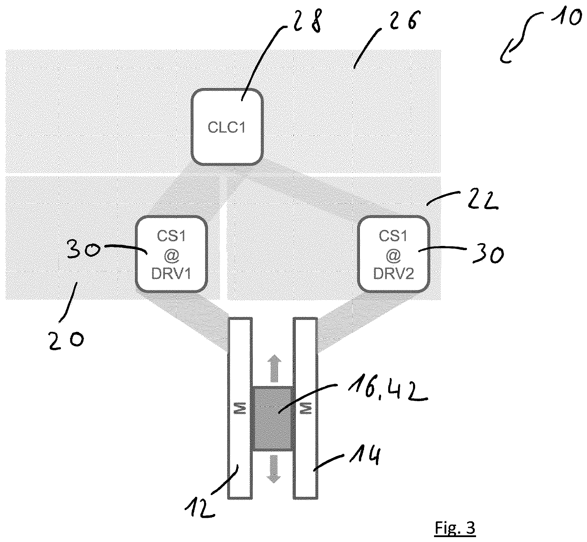

Fig. 3 shows the motor arrangement of Fig. 1B, wherein the two motors 12, 14 are configured as linear motors. The control loop data set 28 is again distributed to the two drive units 20, 22 thereby moving the axis 16, i.e. the carrier, together.

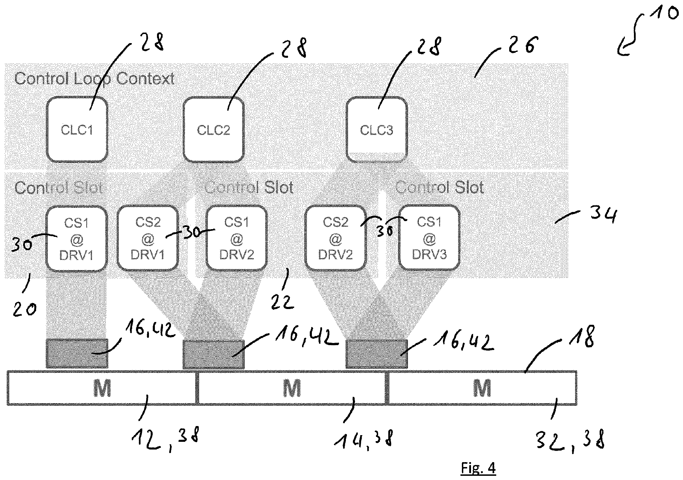

Fig. 4 shows an arrangement similar to Fig. 1C. In addition to Fig. 1C, Fig. 4 shows a third motor 32 which is controlled by a third drive unit 34. The motors 12, 14, 32 are again configured as linear motors and form a continuous track for the axes 16. Fig. 4 shows the carriers corresponding to the axes 16 which can be moved independently from each other. Such an arrangement can e.g. be used in the multi-carrier as shown in Figs. 5 and 6 (see below).

One of the carriers is currently only in the area of the first motor 12, whereas another carrier is in the area of both the first motor 12 and the second motor 14. The carrier shown on the right of Fig. 4 is in the area of the second motor 14 and the third motor 32. For each of the carriers, i.e. for each of the axes 16, a separate control loop data set 28 exists, in Fig. 4 also termed CLC1, CLC2 and CLC3. As the axis 16 shown on the left of Fig. 4 is only in the area of the first motor 12, the control slot 30 of this axis (CLC1) is only assigned to the first drive unit 20. However, the control loop data sets 28 for the two other axes 16 are assigned to the first drive unit 20 and the second drive unit 22 as well as to the second drive unit 22 and the third drive unit 34, respectively. In other words, CLC2 and CLC3 are each assigned to two different control slots 30.

Due to the assignment to two different control slots 30 the first and second motor 12, 14 and the second and third motor 14, 32 can work together to achieve a smooth transition of the axes 16 between the different motors 12, 14, 32. The control of these axes 16 is then based on the same control loop data set 28, and thereby e.g. on the same position value. The drive unit 20, 22, 34 can each determine the current position value and relay the position value to the motion controller 26. The motion controller 26 can then calculate an average value for the position value and update the position value in the control loop data set 28 for the respective axis 16. Also, a share value indicating the share part of driving an axis 16 can be changed over time as the axis 16 moves from one motor to another. For example, for the carrier shown in the middle in Fig. 4 a share value for the first drive unit could be 20% whereas a share value for the second drive unit 22 could be 80% (in the position shown in Fig. 4).

The arrangement of motors 12, 14, 32 and drive units 20, 22, 34 as shown in Fig. 4 can be used in a multi-carrier system 36, as shown in Fig. 5. The multi-carrier system 36 comprises a plurality of linear motors 38 which can be formed by the motors 12, 14 32 and which together form a continuous track 40. The track 40 forms a closed loop. Along the track a plurality of carriers 42 can be moved by the magnetic force of the linear motors 38.

Fig. 6 shows a detailed view of a curved section of the track 40, wherein the curved section comprises four linear motors 38. As can be seen in Fig. 6 the carriers 42 comprise wheels 44 which allow movement along the track 40. The carriers 42 comprise a position magnet 46 which can be detected by the linear motors 38. The linear motors 38 and the respective drive units 20, 22, 34 feed the detected positions of the carriers 42 in the respective control loop data set 28 stored in the motion controller 26.

Additional or different values other than the position values can be present and updated in the control loop data set 28. Also, the control loop data set 28 can be stored and/or maintained in a different unit than the motion controller 26.

Due to the use of the same data from the control loop data set 28 to control the same axis 16 with different motors 12, 14, 32 at the same time, a smooth and accurate operation of the motors 12, 14, 32 is possible.

### List of reference signs

- 10: motor system
- 12: first motor
- 14: second motor
- 16: axis
- 18: track
- 20: first drive unit
- 22: second drive unit
- 24: field bus
- 26: motion controller
- 28: control loop data set
- 30: control slot
- 32: third motor
- 34: third drive unit
- 36: multi-carrier system
- 38: linear motor
- 40: track
- 42: carrier
- 44: wheel
- 46: position magnet

## Claims

1. A method for synchronously controlling a first motor (12) and a second motor (14),
wherein the first motor (12) is controlled by a first drive unit (20), the second motor (14) is controlled by a second drive unit (22),
wherein the first motor (12) and the second motor (14) work together to drive the same axis (16. 42) and/or to move the same load (16, 42),
wherein the drive units (20, 22, 34) each perform a closed loop control for driving the respective motor, wherein the closed loop control of each of the drive units (20, 22, 34) is based on the same control loop data set (28).

2. The method of claim 1,
wherein the drive units (20, 22, 34) directly or indirectly access the same memory which stores the control loop data set (28).

3. The method of at least one of claims 1 or 2,
wherein the control loop data set (28) is repeatedly synchronized between the drive units (20, 22, 34).

4. The method of at least one of the preceding claims,
wherein the control loop data set (28) comprises a position and/or a speed value and/or an acceleration value of the axis (16, 42) and/or of the load (16, 42).

5. The method of at least one of the preceding claims,
wherein the control loop data set (28) comprises one or more of the following
- a mass value of the axis (16, 42) and/or of the load (16, 42);
- an inertia value of the axis (16, 42) and/or of the load (16, 42);
- a friction and/or resistance value of the axis (16, 42) and/or of the load (16, 42);
- gain factors used for the closed loop control within the drive units (20, 22, 34).

6. The method of at least one of the preceding claims,
wherein at least some of the values in the control loop data set (28) are updated by the drive units (20, 22, 34).

7. The method of claim 6,
wherein an updated value for the control loop data set is based on data from two of the drive units (20, 22, 34), wherein the data from the different drive units (20, 22, 34) is preferably averaged or weighted to yield the updated value.

8. The method of at least one of the preceding claims,
wherein the drive units (20, 22, 34), in addition to the control loop data set (28), use internal control loop data which is different for different drive units (20, 22, 34) for performing the closed loop control, wherein the internal control loop data preferably comprises voltage and/or current values for the motor controlled by the respective drive unit.

9. The method of at least one of the preceding claims,
wherein at least one of the drive units (20, 22, 34) is assigned a share value which indicates the share of driving the axis (16, 42) and/or moving the load (16, 42) of the respective motor (12, 14, 32).

10. The method of claim 9,
wherein the share value is set dependent on the speed of the axis (16, 42), dependent on the torque and/or the power consumption of one of the motors (12, 14, 32), dependent on the position of the axis (16, 42) and/or the load (16, 42) and/or is set manually.

11. The method of at least one of the preceding claims,
wherein a third motor (32) is controlled by a third drive unit (34), wherein the third motor drives the same axis (16, 42) and/or moves the same load (16, 42) as the first and/or second motor (12, 14), wherein the third drive unit (34) performs a closed loop control for driving the third motor (32), wherein the closed loop control of the third drive unit (34) is based on the control loop data set (28),
wherein preferably the third motor (32) starts driving the axis (16, 42) and/or moving the load (16, 42) when the first and/or second motor (12, 14) are already driving the axis (16, 42) and/or moving the load (16, 42)
and/or
wherein preferably the first and/or second motor (12, 14) stop driving the axis (16, 42) and/or moving the load (16, 42), wherein one of the other motors continues driving the axis (16, 42) and/or moving the load (16, 42).

12. A motor system (10) comprising a first motor (12) and a second motor (14), a first drive unit (20) and a second drive unit (22) as well as a driven axis (16, 42) or a moved load (16, 42),
wherein the first motor (12) is controlled by the first drive unit (20), the second motor (14) is controlled by the second drive unit (22),
wherein the first motor (12) and the second motor (14) work together to drive the axis (16, 42) and/or to move the load (16, 42),
wherein the drive units (20, 22, 34) each are configured to perform a closed loop control for driving the respective motor (12, 14, 32), wherein the closed loop control of each of the drive units (20, 22, 34) is based on the same control loop data set (28).

13. The motor system of claim 12,
wherein at least one of the motors (12, 14, 32) is a rotating motor or a linear motor (38), wherein preferably two of the motors (12, 14, 32) are linear motors (38) that are arranged on different sides of the load (16, 42) or are arranged one after another to form a continuous track (40) for the load (16, 42).

14. A multicarrier system (36) comprising a plurality of linear motors, the linear motors are arranged along a track (40), the track (40) preferably forming a closed loop, wherein a plurality of carriers (42) are arranged at the track (40) and are independently movable along the track (40) by the linear motors (38), wherein at least two of the linear motors (38) are part of a motor system (10) in accordance with claim 12 or claim 13.

## Amended claims

### Amended claims in accordance with Rule 137(2) EPC.

1. A method for synchronously controlling a first motor (12) and a second motor (14),
wherein the first motor (12) is controlled by a first drive unit (20), the second motor (14) is controlled by a second drive unit (22),
wherein the first motor (12) and the second motor (14) work together to drive a common axis (16, 42) and/or to move a common load (16, 42), wherein the drive units (20, 22, 34) each perform a closed loop control for driving the respective motor,
**characterized in that**
the closed loop control of each of the drive units (20, 22, 34) is based on an identical control loop data set (28).

2. The method of claim 1,
wherein the drive units (20, 22, 34) directly or indirectly access the same memory which stores the control loop data set (28).

3. The method of at least one of claims 1 or 2,
wherein the control loop data set (28) is repeatedly synchronized between the drive units (20, 22, 34).

4. The method of at least one of the preceding claims,
wherein the control loop data set (28) comprises a position and/or a speed value and/or an acceleration value of the axis (16, 42) and/or of the load (16, 42).

5. The method of at least one of the preceding claims,
wherein the control loop data set (28) comprises one or more of the following
- a mass value of the axis (16, 42) and/or of the load (16, 42);
- an inertia value of the axis (16, 42) and/or of the load (16, 42);
- a friction and/or resistance value of the axis (16, 42) and/or of the load (16, 42);
- gain factors used for the closed loop control within the drive units (20, 22, 34).

6. The method of at least one of the preceding claims,
wherein at least some of the values in the control loop data set (28) are updated by the drive units (20, 22, 34).

7. The method of claim 6,
wherein at least two motors (12, 14, 32) work together to drive the common axis (16, 42) and/or to move the common load (16, 42), wherein each of the at least two motors (12, 14, 32) is controlled by a respective drive unit (20, 22, 34), wherein an updated value for the control loop data set is based on data from two of the at least two drive units (20, 22, 34), wherein the data from the different drive units (20, 22, 34) is preferably averaged or weighted to yield the updated value.

8. The method of at least one of the preceding claims,
wherein the drive units (20, 22, 34), in addition to the control loop data set (28), use internal control loop data which is different for different drive units (20, 22, 34) for performing the closed loop control, wherein the internal control loop data preferably comprises voltage and/or current values for the motor controlled by the respective drive unit.

9. The method of at least one of the preceding claims,
wherein at least one of the drive units (20, 22, 34) is assigned a share value which indicates the share of driving the axis (16, 42) and/or moving the load (16, 42) of the respective motor (12, 14, 32), wherein the share value indicates which percentage of power, torque and/or force of a motor (12, 14, 32) is actually provided by the motor (12, 14, 32) as compared to which power, torque and/or force the motor (12, 14, 32) would provide only based on the control loop data set and/or the internal control loop data.

10. The method of claim 9,
wherein the share value is set dependent on the speed of the axis (16, 42), dependent on the torque and/or the power consumption of one of the motors (12, 14, 32), dependent on the position of the axis (16, 42) and/or the load (16, 42) and/or is set manually.

11. The method of at least one of the preceding claims,
wherein a third motor (32) is controlled by a third drive unit (34), wherein the third motor drives the common axis (16, 42) and/or moves the common load (16, 42) as the first and/or second motor (12, 14), wherein the third drive unit (34) performs a closed loop control for driving the third motor (32), wherein the closed loop control of the third drive unit (34) is based on the control loop data set (28),
wherein preferably the third motor (32) starts driving the axis (16, 42) and/or moving the load (16, 42) when the first and/or second motor (12, 14) are already driving the axis (16, 42) and/or moving the load (16, 42) and/or
wherein preferably the first and/or second motor (12, 14) stop driving the axis (16, 42) and/or moving the load (16, 42), wherein one of the other motors continues driving the axis (16, 42) and/or moving the load (16, 42).

12. A motor system (10) comprising a first motor (12) and a second motor (14), a first drive unit (20) and a second drive unit (22) as well as a driven axis (16, 42) or a moved load (16, 42),
wherein the first motor (12) is controlled by the first drive unit (20), the second motor (14) is controlled by the second drive unit (22),
wherein the first motor (12) and the second motor (14) work together to drive the axis (16, 42) and/or to move the load (16, 42),
wherein the drive units (20, 22, 34) each are configured to perform a closed loop control for driving the respective motor (12, 14, 32),
**characterized in that**
the closed loop control of each of the drive units (20, 22, 34) is based on an identical control loop data set (28).

13. The motor system of claim 12,
wherein at least one of the motors (12, 14, 32) is a rotating motor or a linear motor (38), wherein preferably two of the motors (12, 14, 32) are linear motors (38) that are arranged on different sides of the load (16, 42) or are arranged one after another to form a continuous track (40) for the load (16, 42).

14. A multicarrier system (36) comprising a plurality of linear motors, the linear motors are arranged along a track (40), the track (40) preferably forming a closed loop, wherein a plurality of carriers (42) are arranged at the track (40) and are independently movable along the track (40) by the linear motors (38), wherein at least two of the linear motors (38) are part of a motor system (10) in accordance with claim 12 or claim 13.
